# FASCICULE DE BREVET EUROPEEN

(11) **EP 2 613 958 B1**
(45) Date de publication et mention de la délivrance du brevet: **05.11.2014**
(21) Numéro de dépôt: 11773044.0
(22) Date de dépôt: 07.09.2011
(51) Int. Cl.: B60K 31/00, B60T 7/22, G01S 13/86, B60W 30/16, B60W 30/08, B60W 30/09, B60W 30/095, B60W 50/14

(54) **PROCEDE DE GESTION D'UN SYSTEME D'AIDE A LA CONDUITE COUPLE A UN SYSTEME D'AIDE AU FREINAGE D'UN VEHICULE AUTOMOBILE CONFRONTE A UN RISQUE DE COLLISION**
VERFAHREN ZUR HANDHABUNG EINES AN EIN BREMSHILFESYSTEM GEKOPPELTEN FAHRHILFESYSTEMS EINES FAHRZEUGES MIT KOLLISIONSGEFAHR
METHOD FOR MANAGING A DRIVE ASSIST SYSTEM COUPLED TO A BRAKE ASSIST SYSTEM OF AN AUTOMOBILE FACED WITH A RISK OF COLLISION

(30) Priorité: 09.09.2010 FR 1057174
(43) Date de publication de la demande: 17.07.2013
(73) Titulaire: Peugeot Citroën Automobiles SA, 78140 Vélizy Villacoublay (FR)
(72) Inventeur: GERONIMI, Stéphane, F-92380 Garches (FR); FRADIN, Loïc, F-94240 L'hay Les Roses (FR); GURRET, Fabien, F-92160 Antony (FR)
(86) Numéro de dépôt international: PCT/FR2011/052048
(87) Numéro de publication internationale: WO 2012/032263

(56) Documents cités:
- EP-A1- 1 559 607
- DE-A1-102005 046 045
- FR-A1- 2 862 414
- US-A1- 2001 003 810
- US-A1- 2002 011 373
- US-B1- 6 226 389

## Description

L'invention concerne les véhicules équipés d'un système d'aide à la conduite, tel qu'un régulateur de vitesse, et d'un système d'aide au freinage comportant un système d'alerte de risque de collision et un système de freinage automatique en cas de risque de collision.

Elle se rapporte plus particulièrement à un procédé de gestion d'un système d'aide à la conduite couplé à un système d'aide au freinage d'un véhicule automobile.

Aujourd'hui, de plus en plus de fonctions apparaissent pour, d'une part apporter du confort au conducteur en particulier en l'aidant dans la fonction de conduite et, d'autre part, en l'aidant dans les situations critiques notamment, lors d'un risque de collision.

Dans les véhicules actuels, ces fonctions sont indépendantes les unes des autres et donc sans interaction entre elles.

Certains véhicules automobiles sont équipés d'un régulateur de vitesse qui permet de les maintenir à une vitesse de consigne définie par le conducteur. En présence d'une limitation de vitesse imposée par la législation d'un pays, les conducteurs choisissent fréquemment la vitesse maximale légale comme vitesse de consigne.

En théorie, cela est avantageux pour favoriser la fluidité du trafic, notamment sur autoroute. Mais, dans la pratique, on s'aperçoit que les véhicules ne disposent ni de calibration de vitesse identique, ni de précision de vitesse identique, si bien que malgré une même vitesse de consigne, ils ont tendance à se rapprocher ou à s'éloigner progressivement les uns des autres.

Lorsque deux véhicules se rapprochent pour la raison évoquée ci-dessus ou du fait qu'ils n'ont pas les mêmes vitesses de consigne, le conducteur du véhicule suiveur doit, s'il veut respecter une distance inter-véhicules convenable, réduire manuellement la vitesse de consigne, ou bien déboîter (ce qui l'oblige à accélérer afin de dépasser rapidement le véhicule qui le précède et donc à dépasser la vitesse maximale autorisée), ou encore freiner (ce qui désactive le régulateur de vitesse). En outre, il est difficile pour le conducteur du véhicule suiveur de déterminer quand la distance inter-véhicules n'est plus suffisante pour garantir sa sécurité. En effet, la distance inter-véhicules minimale dépend principalement de la vitesse des véhicules, de l'état de surface de la route et des capacités de freinage des véhicules. En raison de cette difficulté, certains pays ont imposé, ou sont sur le point d'imposer, un temps inter-véhicules (ou TIV) minimal correspondant à la vitesse maximale autorisée.

Ce TIV étant également difficile à estimer et donc à respecter, il a été proposé, notamment dans le document FR 2 888 536, de limiter le temps inter-véhicules et la vitesse du véhicule suiveur, afin d'empêcher le conducteur de ce dernier de suivre de trop près le véhicule qui le précède. Pour ce faire, on estime le temps inter-véhicules par le calcul, à partir de la distance inter-véhicules et de la vitesse du véhicule suiveur, puis on compare ce temps inter-véhicules estimé à une valeur de temps inter-véhicules de référence, et on compare la vitesse instantanée du véhicule suiveur à une valeur de vitesse de référence. Enfin, on limite le couple du moteur du véhicule suiveur dès que le temps inter-véhicules estimé atteint la valeur du temps inter-véhicules de référence et/ou que la vitesse du véhicule suiveur atteint la vitesse de référence.

En particulier, la fonction de confort « Régulateur de Vitesse Intelligent » (RVVi) décrite dans le document FR 2 920 384, apporte une amélioration de la régulation en ralentissant le véhicule lors de l'approche d'un véhicule plus lent qui le précède.

Cette fonction apporte aussi des améliorations au niveau sécurité, en :
- interdisant d'activer le régulateur lorsque le véhicule précédant le véhicule porteur (sous entendu, le véhicule suiveur équipé du régulateur) est soit trop près soit trop lent, ou
- désactivant automatiquement le régulateur du véhicule porteur si ce dernier s'approche trop ou trop vite d'un véhicule le précédant.

Par ailleurs, dans le domaine de la sécurité, deux fonctions distinctes permettent :
- d'une part, d'alerter le conducteur en cas de risque de collision avec le véhicule qui le précède (fonction ARC : « Alerte Risque de Collision »),
- d'autre part, d'aider le conducteur en décélérant le véhicule pour lui donner plus de temps pour agir en cas de collision imminente et diminuer la vitesse au choc (fonction FARC : « Freiner Automatiquement le véhicule en cas de Risque de Collision »).

Les inconvénients majeurs d'avoir plusieurs fonctions indépendantes les unes des autres, sont que chacune d'elles propose leur propre interface homme-machine IHM : moyens de génération d'alertes, moyens de réglages des consignes, ..., et leurs propres modes d'utilisation qui peuvent apparaitre complexes pour le conducteur voire incompréhensibles.

De plus, dans certaines situations de vie, les informations et/ou alertes déclenchées par les fonctions peuvent être incohérentes ou redondantes.

Ces inconvénients sont alors perçus pour le conducteur du véhicule équipé de ces fonctions, comme des points négatifs alors que ces fonctions, destinées à sécuriser le conducteur, ne devraient être perçues que positivement.

On connait, notamment du document US2002/011373, un procédé conforme au préambule de la revendication 1.On connait également du document FR2 862 414 un procédé d'assistance au freinage apte à contrôler et adapter l'intensité du freinage en fonction de l'imminence de la collision avec un obstacle.

La présente invention vise à améliorer l'interaction du système avec le conducteur.

A cet effet, la présente invention a pour premier objet, un procédé de gestion d'un système d'aide à la conduite et d'un système d'aide au freinage d'un véhicule automobile conforme à la partie caractérisante de la revendication 1.

Selon une caractéristique, le procédé ci-dessus consiste à interdire l'activation ou à désactiver le système de régulation quand le véhicule est à une distance inférieure à une distance de consigne ou un temps inférieur à un temps inter-véhicule déterminé de l'obstacle, et il consiste à activer le système de freinage automatique avec une intensité qui est fonction du temps restant avant collision avec l'obstacle.

Selon une autre caractéristique, il consiste à générer une troisième alerte à un troisième temps restant avant collision, inférieur au deuxième temps restant imposant une intervention immédiate du conducteur pour éviter la collision.

Selon une autre caractéristique, il consiste à activer le système de freinage automatique avec une première intensité déterminée, à un quatrième temps restant avant collision, inférieur au troisième temps restant avant collision ; temps restant pour lequel un évitement de la collision par braquage ou freinage est difficile pour une grande majorité des conducteurs.

Selon une autre caractéristique, l'alerte est de type visuelle et/ou sonore et/ou haptique.

Selon une autre caractéristique, l'intensité de l'alerte est proportionnelle à l'imminence de la collision.

Selon une autre caractéristique, il consiste à activer le système de freinage automatique avec une intensité maximale en fonction de l'intension maximale de décélération du véhicule, quand l'évitement de la collision par braquage devient quasi irréalisable.

L'invention a pour deuxième objet un système d'aide à la conduite couplé à un système d'aide au freinage d'un véhicule pour la mise en oeuvre du procédé tel que décrit ci-dessus.

Les différentes fonctions ainsi unifiées, gagnent en cohérence et de ce fait, apportent une meilleure ergonomie pour le client.

Le procédé selon l'invention apporte par ailleurs une facilité de mise au point en unifiant les algorithmes et les critères utilisés pour définir les différents seuils de déclenchement et de cadencement de l'activation/désactivation des différentes phases mises en oeuvre par les fonctions de confort RVVi, et de sécurité ARC, FARC.

D'autres caractéristiques et avantages de l'invention apparaîtront à l'examen de la description détaillée ci-après, accompagnée des figures annexées illustrant :
- la figure 1, une architecture fonctionnelle pour la mise en oeuvre du procédé selon l'invention ; et
- la figure 2, un scénario préféré de séquencement des différentes phases du procédé selon l'invention.

Dans la description qui suit, on entend par système, l'ensemble des moyens matériels (Hard) et logiciels (Soft) coopérant entre eux pour assurer une fonction (RVVi, ARC, FARC).

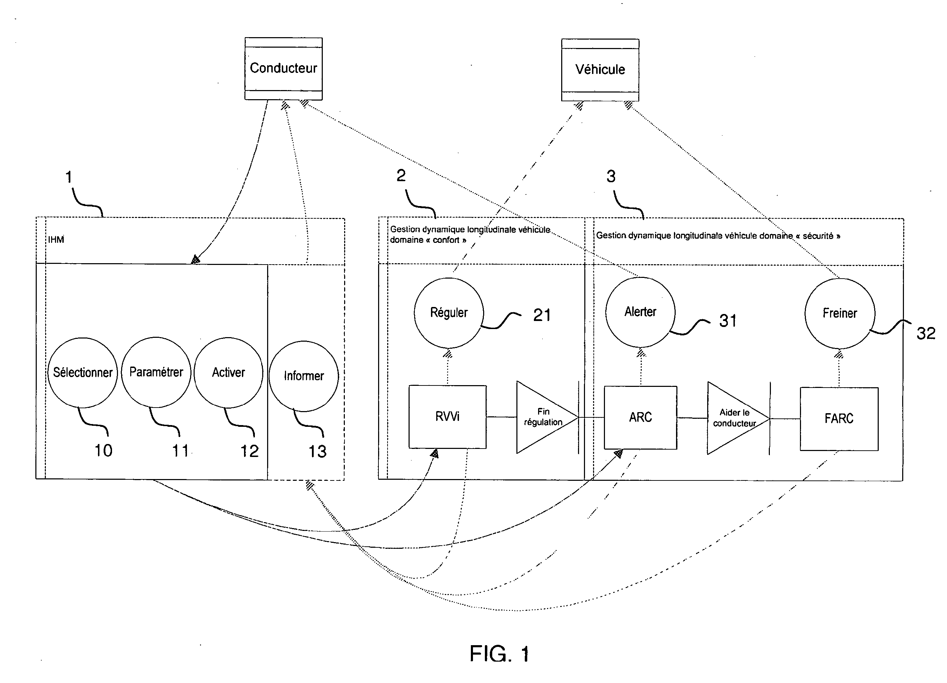

Un exemple d'architecture fonctionnelle pour la mise en oeuvre du procédé selon l'invention, est illustré à la figure 1.

Cette architecture comporte :
- un module « IHM » 1, commun aux trois fonctions RVVi, ARC et FARC;
- un module 2 de gestion de la dynamique longitudinale du véhicule en mode dit de "confort", c'est-à-dire un mode dans lequel la fonction RVVi est activée (le module 2 fait partie du système d'aide à la conduite) ; et
- un module 3 de gestion de la dynamique longitudinale du véhicule en mode dit de "sécurité", c'est-à-dire un mode dans lequel la fonction RVVi est désactivée et où les fonctions ARC et FARC sont prêtes à être activées (le module 3 fait partie du système d'aide au freinage).

On décrit ci-après les principaux moyens mis en oeuvre par ces trois fonctions en rappelant entre parenthèses, celles qui sont concernées au premier ordre.

Le module IHM 1 comporte notamment des moyens 10 à 13 pour :
- permettre au conducteur de sélectionner 10 les fonctions de confort (RVVi) et de sécurité (ARC et FARC) ;
- permettre au conducteur de paramétrer 11 sa vitesse de consigne (RVVi), pour entre autre :
- permettre au conducteur de choisir la distance de consigne ou temps inter-véhicule par rapport au véhicule qui le précède (RVVi) ;
- autoriser le conducteur à activer 12 la fonction régulation (RRVi) en toute sécurité (RVVi, ARC),
- informer 13 le conducteur de l'état de la fonction (RVVi, ARC, FARC), pour entre autre :
- avertir le conducteur qu'il doit reprendre la main (RVVi, ARC) ;
- avertir le conducteur qu'il doit agir pour éviter la collision (ARC) ;
- permettre au conducteur de reprendre la main sur les fonctions de confort et de sécurité (RVVi, ARC, FARC).

Ainsi, la désactivation automatique de la fonction RVVi (avertir le conducteur qu'il doit reprendre la main) est effectuée en cohérence avec la génération d'une alerte (informer le conducteur de l'état de la fonction).

Le module 2 de gestion de la dynamique longitudinale du véhicule, en mode "confort", reçoit les informations fournies par un capteur de type télémètre (non représenté), et régule 21 la dynamique longitudinale du véhicule pour maintenir la distance de consigne ou temps inter-véhicules TIV choisi par le conducteur via le module IHM 1.

Le module 3 de gestion de la dynamique, dans le mode "sécurité", en fonction des informations fournies par le télémètre et de l'analyse de la situation de vie, génère une alerte 31 puis une décélération du véhicule par freinage 32 ; cette décélération pouvant être progressive selon le niveau de criticité et aller jusqu'au freinage maximal du véhicule.

Les différentes interactions entre les modules IHM 1, gestion "confort" 2 et gestion "sécurité" 3, entre eux et avec le conducteur et le véhicule, sont représentées par des flèches entrantes ou sortantes.

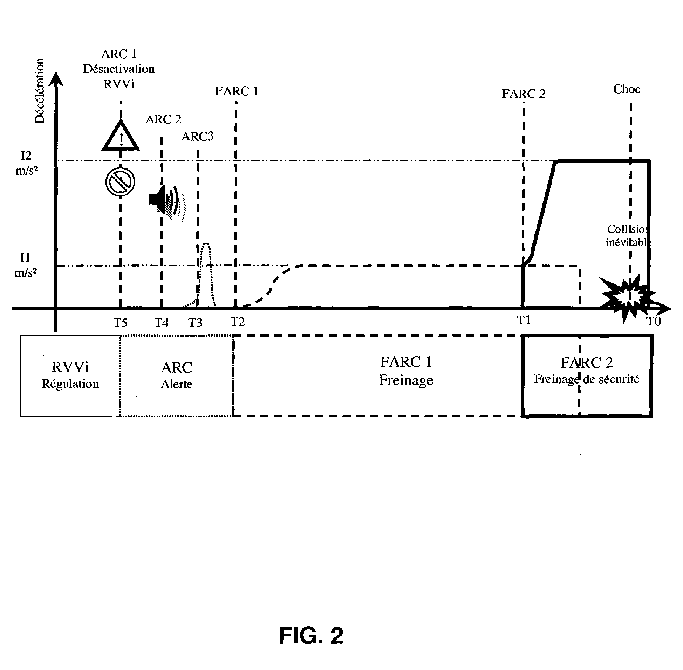

En référence à la figure 2, on a représenté un exemple préféré de séquencement des différentes phases du procédé selon l'invention.

Dans ce scénario, l'instant T0 correspond à l'instant prévisionnel de la collision.

On définit le temps de déclenchement des différentes phases en TTC : "Time To Collision". Cette grandeur définit le temps restant jusqu'à la collision en supposant que les vitesses de l'obstacle et du véhicule porteur restent inchangées.

Le temps TTC se calcule en divisant la distance inter-véhicule par la différence des vitesses de l'obstacle et du véhicule porteur.

L'instant T1 correspond à un temps pour lequel un évitement de la collision par braquage devient quasi irréalisable. Dans ce cas, un freinage automatique d'intensité 12, exprimée en m/s² - grandeur homogène à une décélération - (valeur pouvant aller jusqu'à la valeur maximale de décélération du véhicule porteur) est déclenché : phase FARC 2.

L'instant T2 correspond à un temps pour lequel un évitement de la collision par braquage ou freinage est difficile pour une grande majorité des conducteurs. Dans cette phase FARC 1, un freinage automatique d'intensité 11, exprimée en m/s², (valeur modérée comme par exemple 4 à 6 m/s²) est déclenché.

Les instants T5, T4 et T3 correspondent à différents niveaux de criticité avant collision :
- l'instant T5 correspond à l'instant pour lequel les automates de régulation sont désactivés en même temps qu'une alerte de type visuelle et/ou sonore et/ou haptique d'intensité modérée, est présentée au conducteur à titre essentiellement informatif sur le risque potentiel d'une collision ;
- l'instant T4 correspond à l'instant où l'intervention du conducteur est fortement recommandée. Dans ce cas, l'alerte est plutôt de type sonore et/ou haptique et de plus forte intensité afin de faire réagir rapidement le conducteur ;
- l'instant T3 correspond à l'instant pour lequel l'intervention immédiate du conducteur est nécessaire pour éviter la collision : une alerte plutôt de type haptique d'intensité élevée doit amener le conducteur à agir.

Parmi les différentes phases présentées ci-dessus, certaines d'entre elles peuvent ne pas être implémentées.

La combinaison minimale serait d'avoir une alerte (sonore et/ou haptique) avec désactivation de la fonction régulation RVVi si celle-ci est active, et une fonction de freinage FARC fonctionnant dans la phase FARC 1 avec une première intensité de freinage modérée I1.

Sur cette combinaison minimale peut venir s'adjoindre progressivement une fonction d'alerte ARC générant une première alerte au temps restant avant collision T4 puis générant une deuxième alerte au temps restant avant collision T3.

Une phase de freinage FARC2, avec une intensité maximale I2 proche de l'intensité maximale de décélération du véhicule, peut être activée en plus de l'une des combinaisons précédentes.

Les temps de déclenchement des différentes phases peuvent s'exprimer autrement qu'en TTC, sans pour autant sortir du cadre de la présente invention, comme par exemple :
- le Temps Inter Véhicule (le TIV se calcule en divisant la distance inter-véhicule par la vitesse du véhicule porteur) ;
- la distance inter véhicule ;
- ou une combinaison de différents critères dynamiques incluant la distance inter véhicule, les vitesses absolues et/ou relatives et les accélérations absolues et/ou relatives.

Le procédé selon l'invention permet ainsi d'assurer un séquencement cohérent et graduel de fonctions alliant confort et sécurité pour le conducteur.

Pour conclure, le procédé selon l'invention se base sur un même algorithme qui :
- détecte les obstacles : objet mobile tel qu'un véhicule précédent le véhicule porteur ou fixe tel qu'un véhicule arrêté ou tout autre objet fixe, et plus généralement les "cibles" se trouvant sur la trajectoire du véhicule porteur ;
- détermine les actions à réaliser selon une combinaison de différents critères dynamiques comme la distance, les vitesses absolues et/ou relatives, les accélérations absolues et/ou relatives ... ;
- agit sur le système de régulation RVVi, sur le système d'alerte ARC lorsque la régulation ne peut plus être satisfaite et sur le système de freinage FARC lorsque le conducteur n'a pas réagi aux alertes ou n'a pas réagi de manière suffisamment rapide pour éviter une collision avec la cible.

Les fonctions remplies par les trois fonctions RVVi, ARC et FARC s'enchaînent selon un séquencement déterminé et peuvent ne présenter de ce fait qu'une seule interface avec le conducteur qui peut être celle du système d'aide à la conduite et plus particulièrement celle du régulateur de vitesse.

En effet, le réglage du régulateur nécessite l'intervention du conducteur pour sélectionner, paramétrer et activer la fonction régulation. Les deux autres fonctions ARC et FARC dites de sécurité viennent alors compléter naturellement celle du régulateur et peuvent se paramétrer, si nécessaire, en fonction des choix du conducteur en utilisant la même interface : celle du régulateur RVVi.

## Revendications

1. Procédé de gestion d'un système d'aide à la conduite et d'un système d'aide au freinage d'un véhicule automobile, ledit système d'aide à la conduite comportant un système de régulation de vitesse (RVVi) apte à réguler la vitesse d'un véhicule automobile, et ledit système d'aide au freinage comportant un système de freinage automatique (FARC) qui est activé en cas de risque de collision du véhicule avec un obstacle présent sur sa trajectoire, ledit procédé consistant :
i) à interdire l'activation du système de régulation (RVVi) ou le désactiver quand le véhicule ne remplit plus au moins un critère dynamique déterminé du véhicule en présence de l'obstacle,
**caractérisé en ce qu'**il consiste :
ii) à générer une première alerte (ARC 1) à un premier temps restant (T5) avant collision pour informer le conducteur d'un risque potentiel de collision ;
iii) à générer une deuxième alerte (ARC 2) à un deuxième temps restant (T4) avant collision, inférieur au premier temps restant (T5), recommandant fortement l'intervention du conducteur pour éviter la collision ; et
iv) à activer le système de freinage automatique (FARC) avec une intensité (I1, 12) qui est fonction du temps restant avant collision avec l'obstacle, en l'absence d'intervention du conducteur sur la dynamique véhicule suite à la génération de la première alerte (ARC 1) et en l'absence de réaction ou réaction insuffisante du conducteur pour éviter une collision.

2. Procédé selon la revendication précédente, **caractérisé en ce qu'**il consiste à générer une troisième alerte à un troisième temps restant (T3) avant collision, inférieur au deuxième temps restant (T4) imposant une intervention immédiate du conducteur pour éviter la collision.

3. Procédé selon la revendication précédente, **caractérisé en ce qu'**il consiste à activer le système de freinage automatique (FARC) avec une première intensité (I1) déterminée, à un quatrième temps restant (T2) avant collision, inférieur au troisième temps restant (T3) avant collision ; temps restant pour lequel un évitement de la collision par braquage ou freinage est difficile pour une grande majorité des conducteurs.

4. Procédé selon l'une des revendications 1 à 3, **caractérisé en ce que** l'alerte est de type visuelle et/ou sonore et/ou haptique.

5. Procédé selon la revendication précédente, **caractérisé en ce que** l'intensité de l'alerte est proportionnelle à l'imminence de la collision.

6. Procédé selon l'une des revendications précédentes, **caractérisé en ce qu'**il consiste à activer le système de freinage automatique (FARC) avec une intensité (I2) maximale en fonction de l'intension maximale de décélération du véhicule, quand l'évitement de la collision par braquage devient quasi irréalisable.

7. Procédé selon l'une des revendications précédentes, **caractérisé en ce qu'**il consiste à interdire l'activation ou à désactiver le système de régulation quand le véhicule est à une distance inférieure à une distance de consigne ou un temps inférieur à un temps inter-véhicule déterminé de l'obstacle.

8. Système d'aide à la conduite couplé à un système d'aide au freinage d'un véhicule mettant en oeuvre le procédé selon l'une des revendications 1 à 7, ledit système d'aide à la conduite comportant un régulateur de vitesse (RVVi) apte à réguler la vitesse d'un véhicule automobile et ledit système d'aide au freinage comportant un système d'alerte (ARC) et un système de freinage automatique (FARC) ; le système d'aide à la conduite et le système d'aide au freinage automatique comportant une interface IHM (1) commune qui est celle du régulateur de vitesses (RVVi).

## Patentansprüche

1. Verfahren zur Verwaltung eines Systems der Fahrhilfe und eines Systems der Bremshilfe eines Kraftfahrzeugs, wobei das System der Fahrhilfe ein System der Geschwindigkeitsregulierung (RVVi) umfasst, das dazu in der Lage ist, die Geschwindigkeit eines Kraftfahrzeugs zu regulieren, und wobei das System der Bremshilfe ein automatisches Bremssystem (FARC) umfasst, das im Fall des Risikos eines Zusammenstosses des Fahrzeugs mit einem Hindernis, das sich auf seiner Fahrspur befindet, aktiviert wird ist, wobei das Verfahren darin besteht:
i) die Aktivierung des Regulierungssystem (RVVi) zu sperren oder es zu deaktivieren, wenn das Fahrzeug mindestens ein bestimmtes dynamisches Kriterium des Fahrzeugs in Anwesenheit des Hindernisses nicht mehr erfüllt,
**dadurch gekennzeichnet, dass** es in Folgendem besteht:
ii) einen ersten Alarm (ARC 1) bei einer ersten Restzeit (T5) vor dem Zusammenstoss zu erzeugen, um den Fahrer über ein potenzielles Risiko des Zusammenstosses zu informieren;
iii) einen zweiten Alarm (ARC 2) bei einer zweiten Restzeit (T4) vor dem Zusammenstoss zu erzeugen, die kleiner als die erste Restzeit (T5) ist, wodurch der Eingriff des Fahrers, um den Zusammenstoss zu verhindern, dringend empfohlen wird; und
iv) das automatische Bremssystem (FARC) mit einer Intensität (I1, I2), die eine Funktion der Restzeit vor dem Zusammenstoss mit dem Hindernis ist, bei Abwesenheit des Eingriffs des Fahrers auf die Fahrzeugdynamik nach der Erzeugung des ersten Alarms (ARC 1) und bei Abwesenheit einer Reaktion oder ausreichenden Reaktion des Fahrers zu aktivieren, um einen Zusammenstoss zu verhindern.

2. Verfahren nach dem vorhergehenden Anspruch, **dadurch gekennzeichnet, dass** es darin besteht, einen dritten Alarm bei einer dritten Restzeit (T3) vor dem Zusammenstoss zu erzeugen, die kleiner als die zweite Restzeit (T4) ist, der zu einem unmittelbaren Eingriff des Fahrers auffordert, um den Zusammenstoss zu verhindern.

3. Verfahren nach dem vorhergehenden Anspruch, **dadurch gekennzeichnet, dass** es darin besteht, das automatische Bremssystem (FARC) mit einer ersten Intensität (I1) bei einer vierten Restzeit (T2) vor dem Zusammenstoss zu aktivieren, die kleiner als die dritte Restzeit (T3) vor dem Zusammenstoss ist; wobei bei dieser Restzeit eine Verhinderung des Zusammenstoßens durch Einschlagen oder Bremen für eine große Mehrzahl des Fahrer schwierig ist.

4. Verfahren nach einem der Ansprüche 1 bis 3, **dadurch gekennzeichnet, dass** der Alarm visueller und/oder akustischer und/oder haptischer Art ist.

5. Verfahren nach dem vorhergehenden Anspruch, **dadurch gekennzeichnet, dass** die Intensität des Alarms proportional zum Bevorstehen des Zusammenstosses ist.

6. Verfahren nach einem der vorhergehenden Ansprüche, **dadurch gekennzeichnet, dass** es darin besteht, das automatische Bremssystem (FARC) mit einer maximalen Intensität (I2) je nach der maximal beabsichtigten Verlangsamung des Fahrzeugs zu aktivieren, wenn die Vermeidung des Zusammenstosses durch Einschlagen fast undurchführbar wird.

7. Verfahren nach einem der vorhergehenden Ansprüche, **dadurch gekennzeichnet, dass** es darin besteht, die Aktivierung des Regulierungssystem zu sperren oder es zu deaktivieren, wenn sich das Fahrzeug in einem Abstand, der kleiner als ein vorgegebener Abstand oder in einer Zeit, die kleiner als eine vorgegebene Zeit zwischen Fahrzeugen ist, vom Hindernis befindet.

8. System der Fahrhilfe, gekoppelt mit einem System der Bremshilfe eines Fahrzeugs, das das Verfahren nach einem der Ansprüche 1 bis 7 durchführt, wobei das System der Fahrhilfe einen Geschwindigkeitsregler (RVVi) umfasst, der dazu in der Lage ist, die Geschwindigkeit eines Kraftfahrzeugs zu regulieren, und wobei das System der Bremshilfe ein Alarmsystem (ARC) und ein automatisches Bremssystem (FARC) umfasst, wobei das System der Fahrhilfe und das System der automatischen Bremshilfe eine gemeinsame Schnittstelle IHM (1) umfassen, die diejenige des Geschwindigkeitsreglers (RVVi) ist.

## Claims

1. Method for managing a driving-aid system and a braking-aid system for a motor vehicle, said driving-aid system comprising a speed-regulation system (RVVi) able to regulate the speed of a motor vehicle, and said braking-aid system comprising an automatic braking system (FARC) that is activated in the event of risk of collision of the vehicle with an object present on its path, said method consisting of:
i) preventing activation of the regulation system (RVVi) or deactivating it when the vehicle no longer fulfils at least one given dynamic criterion of the vehicle when the obstacle is present,
**characterised in that** it consists of:
ii) generating a first alert (ARC 1) at a first time (T5) remaining before collision in order to inform the driver of a potential risk of collision;
iii) generating a second alert (ARC 2) at a second time (T4) remaining before collision, shorter than the first remaining time (T5), strongly recommending the intervention of the driver in order to avoid the collision; and
iv) activating the automatic braking system (FARC) with an intensity (I1, I2) that depends on the time remaining before collision with the obstacle, in the absence of intervention by the driver on the vehicle dynamics following the generation of the first alert (ARC 1) and in the absence of a reaction or an insufficient reaction from the driver in order to avoid a collision.

2. Method according to the preceding claim, **characterised in that** it consists of generating a third alert at a third time (T3) remaining before collision, shorter than the second remaining time (T4), requiring immediate intervention from the driver in order to avoid the collision.

3. Method according to the preceding claim, **characterised in that** it consists of activating the automatic braking system (FARC) with a first given intensity (I1), at a fourth time (T2) remaining before collision, shorter than the third time (T3) remaining before collision; a remaining time for which an avoidance of the collision by steering or braking is difficult for a great majority of drivers.

4. Method according to one of claims 1 to 3, **characterised in that** the alert is of the visual and/or audible and/or haptic type.

5. Method according to the preceding claim, **characterised in that** the intensity of the alert is proportional to the imminence of the collision.

6. Method according to one of the preceding claims, **characterised in that** it consists of activating the automatic braking system (FARC) with a maximum intensity (I2) according to the maximum intensity of deceleration of the vehicle, when avoiding the collision by steering becomes almost unachievable.

7. Method according to one of the preceding claims, **characterised in that** it consists of preventing the activation of or deactivating the regulation system when the vehicle is at a distance less than a set distance or at a time less than a given inter-vehicle time from the obstacle.

8. Driving-aid system coupled with a braking-aid system for a vehicle using the method according to one of claims 1 to 7, said driving-aid system comprising a speed regulator (RVVi) able to regulate the speed of a motor vehicle and said braking-aid system comprising an alert system (ARC) and an automatic braking system (FARC); the driving-aid system and the automatic braking-aid system comprising a common man-machine interface (1) which is that of the speed regulator RVVi).
